(19)

**Europäisches Patentamt**
**European Patent Office**
**Office européen des brevets**

(11) **EP 3 181 635 A1**

(12) **EUROPEAN PATENT APPLICATION**

(43) Date of publication:
**21.06.2017 Bulletin 2017/25**

(51) Int Cl.:
**C08L 23/04** *(2006.01)*

(21) Application number: **15201197.9**

(22) Date of filing: **18.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Borealis AG**
**1220 Vienna (AT)**

(72) Inventors:
• **Anker, Martin**
**42543 Hisings Kärra (SE)**
• **Watson, Ann**
**Arbroath, DD11 3RH (GB)**
• **Kontro, Anna**
**442 41 Kungälv (FI)**
• **Wannerskog, Åsa**
**416 48 Göteborg (SE)**

(74) Representative: **Kador & Partner**
**Corneliusstraße 15**
**80469 München (DE)**

(54) **A COMPOUNDED POLYETHYLENE COMPOSITION, PROCESS FOR ITS MANUFACTURING AND ARTICLES COMPRISING IT**

(57)    The present invention relates to a compounded polyethylene composition having a density of 930 to 965 kg/m$^3$ and comprising at least 0.01 percent by weight (wt-%) of sodium bicarbonate after compounding of the compounded polyethylene composition, wherein the ratio between sodium bicarbonate, in the polyethylene composition, before and after compounding is **X,** wherein $X_1 \leq X < X_2$, and $X_1$ is 1.00 and $X_2$ is 2.00, an article, for example, a coating, a wire or a cable, comprising the compounded polyethylene composition, a process for producing the article, and use of the compounded polyethylene composition.

EP 3 181 635 A1

**Description**

**Field of invention**

The present invention relates to a new compounded polyethylene composition, a process for manufacturing the compounded polyethylene composition, an article, for example, a coating, a wire or a cable, comprising the compounded polyethylene composition, a process for producing the article, and use of the compounded polyethylene composition.

**Background**

Foaming of polyethylene can be done either using chemical or physical blowing agents, or a combination of both. Chemical blowing agents are substances which release blowing gas through thermal decomposition reactions and the chemical blowing agent is consumed in the foaming reaction. Examples of such substances are hydrazine, hydrazide, or azodicarbonamide, or those based on combinations of solid organic acids (or a metal salt thereof) and alkaline earth metal or alkali metal carbonate(s) or alkali metal bicarbonate(s), such as combination of sodium citrate/citric acid and sodium bicarbonate. Physical blowing agents are gasses which are injected directly into the polymer melt. In such processes it is common to use chemical blowing agents as cell nucleators as the gas formed by the blowing agent reaction serves as nucleating points with lower energy for bubble formation. The gas used as physical blowing agent can be for example $N_2$ or $CO_2$.

For foamed polyethylene used in communication cables, both electrical and mechanical properties are important. HDPE has a lower dielectric constant and lower loss factor than LDPE as well as higher strength and hardness.

Electrical communication cables for telephone and data transmission are normally twisted pair cables which is a type of wiring in which two conductors of a single circuit are twisted together for the purpose of cancelling out electromagnetic interference from external sources. Assembly of the twisted pair cables involves passing the insulated conductor through machinery and this may cause abrasion or deformation. The twisting process is extremely delicate as back tension will greatly affect the tightness and hence separation of the conductors. Excess tension during subsequent sheathing and installation will equally affect conductor separation. In effect we are dealing with a crush phenomenon. The key parameters affecting crush performance are tensile strength and hardness which obviously must be maximised in order to achieve optimum results.

Polyethylene density is normally used for classification of different types of polyethylene - HDPE, MDPE, LLDPE, LDPE, VLDPE and ULDPE. The density of polyethylene is directly related to the crystallinity of the material, and thus the melting point as the melting point is essentially determined by the lamellar thickness of the crystalline fraction. Pure linear PE with high crystallinity has a density of about 965 kg/m³ and melting point of around 130°C. With decreasing polyethylene density the melting point is lowered. For highly branched low density polyethylene the melting point is typically around 110°C as the crystallinity is disturbed by the long and short chain branching in the LDPE chain structure.

A polyethylene having a density of 930 to 965 kg/m³ has better mechanical and electrical properties than a polyethylene having a lower density and is thus preferred for communication cables. For foamed insulation it is necessary that the insulation polymer material has a good melt strength as too poor melt strength results in a collapsed cell structure which is not good for either mechanical or electrical properties of the cable insulation layer. A polyethylene having a density of 930 to 965 kg/m³ has relatively poor melt strength, and for foamed insulation it is often blended with a low density polyethylene from a high pressure polymerisation process in order to improve melt strength to ensure a foamed insulation with a closed cell structure and homogeneous cell distribution.

Endothermic blowing agents are often sold as combinations of sodium bicarbonate and a citric acid derivative. These blowing agents are normally added directly to the extruder hopper, or dry mixed with polyethylene prior to extrusion. In high speed extrusion processes like cable extrusion, this way of adding the blowing agent does not provide sufficient homogenisation of the blowing agent in the polymer melt and this results in a foamed insulation with poor cell structure and bad surface. By compounding the blowing agents into polyethylene prior to extrusion, the blowing agents become better distributed in the polymer resulting in a fine and homogeneous cell structure and a smooth surface.

The problem with endothermic blowing agents is that sodium bicarbonate starts to decompose already at temperatures below 100°C, with a reaction rate maximum between 130 and 140°C. The reaction rate maximum temperature is generally considered as being too close to the melting temperature of a polyethylene having a density of 930 to 965 kg/m³ to allow compounding without a complete decomposition of the sodium bicarbonate blowing agent.

WO 2014018768 is providing additive compositions for polymer base materials with particular use in applications where high dielectric constants, low loss factors and low densities are preferred, such as in applications involving wire and cable dielectric materials. The disclosed additive compositions consist of thermoplastic polymer carrier, chemical blowing agent and filler.

#### Description of the invention

The present invention relates to a compounded polyethylene composition having a density of 930 to 965 kg/m$^3$ and comprising at least 0.01 percent by weight (wt-%) of sodium bicarbonate after compounding of the compounded polyethylene composition, wherein the ratio between sodium bicarbonate, in the polyethylene composition, before and after compounding is **X,** wherein $X_1 \leq X < X_2$, and $X_1$ is 1.00 and $X_2$ is 2.00.

The sodium bicarbonate functions as a blowing agent and gradually decomposes into sodium carbonate, water and carbon dioxide. The decomposition reaction is endothermic and heat is required in order for it to occur. The reaction start to occur already at temperatures below 100°C, but the reaction rate is very low at those temperatures. The reaction increases rapidly as temperature increases with a reaction rate maximum between 130°C and 140°C Hartman et al., Ind. Eng. Chem. Res. 2013, 52, 10619-10626. A polyethylene, having a density of 930 to 965 kg/m$^3$, has a melting temperature around 130°C, and it is generally believed that compounding of sodium bicarbonate into a polyethylene having a density of 930 to 965 kg/m$^3$ is not possible as the melting point of the polymer is very close to the maximum decomposition rate of the sodium bicarbonate blowing agent. Surprisingly it has been found that by using a soft type of mixing unit and keeping specific energy input at a low level it is possible to mix sodium bicarbonate in a polyethylene having a density of 930 to 965 kg/m$^3$ with only partial loss of sodium bicarbonate. The amount of sodium bicarbonate in the polyethylene composition after the mixing step shall be at least 0.01 percent by weight (wt-%) and can be expressed as the ratio of sodium bicarbonate, in the polyethylene composition, before and after compounding. This ratio is here defined as **X,** wherein $X_1 \leq X < X_2$, and $X_1$ is 1.00 and $X_2$ is 2.00. Further, an $X_2$ below 2.00 means that there is more than 50 % of sodium bicarbonate remaining in the composition that can be used for foaming the composition in the next process step which can be, for example, cable extrusion.

Compounding the blowing agent masterbatch into the base resin gives better distribution of the blowing agent and possible nucleating agent than dry mixing with the polyethylene prior to extrusion or directly adding the blowing agent masterbatch into the extruder hopper. This contributes to more evenly distributed cells and more even cell size in the final product, which is a requirement for good communication cables.

The compounded polyethylene composition comprises sodium bicarbonate functioning as a chemical blowing agent, and may also comprise additives such as antioxidants, lubricants, acid scavengers and nucleating agents. The polyethylene should be medium or high density polyethylene, and the chemical blowing agent is sodium bicarbonate either alone or in combination with other blowing agents such as citric acid, sodium citrate salts and azodicarbonamide.

Sodium bicarbonate is a chemical blowing agent which is commonly used for foaming of plastics. This blowing agent thermally decomposes into sodium carbonate, water and carbon dioxide. The rate of decomposition depends on the temperature, and the maximum decomposition rate occurs between 130-140°C.

An embodiment of the present invention relates to the compounded polyethylene composition, as described herein, wherein the compounded polyethylene composition is foamable.

Foamable means that it is possible to produce a foamed article from the composition in for example an extrusion process. The composition contains the components needed for the foaming and it is not necessary to add anything before the processing step in which the foamed article is produced. However, it is possible to inject gas into the extruder in order to reach higher expansion degrees than with pure chemical foaming where all gas comes from the decomposition reactions of the blowing agent(s).

A further embodiment of the present invention relates to the compounded polyethylene composition, as described herein, wherein the amount of sodium bicarbonate in the polyethylene composition after the mixing step shall be at least 0.02 wt-%.

Still a further embodiment of the present invention relates to the compounded polyethylene composition, as described herein, wherein the amount of sodium bicarbonate in the polyethylene composition after the mixing step shall be at least 0.03 wt-%.

An even further embodiment of the present invention relates to the compounded polyethylene composition, as described herein, wherein the amount of sodium bicarbonate in the polyethylene composition after the mixing step shall be at least 0.04 wt-%.

A further embodiment of the present invention relates to the compounded polyethylene composition, as described herein, wherein the amount of sodium bicarbonate in the polyethylene composition after the mixing step shall be at least 0.045 wt-%.

Still a further embodiment of the present invention relates to the compounded polyethylene composition, as described herein, wherein the amount of sodium bicarbonate in the polyethylene composition after the mixing step shall be at least 0.05 wt-%.

An even further embodiment of the present invention relates to the compounded polyethylene composition, as described herein, wherein the amount of sodium bicarbonate in the polyethylene composition after the mixing step shall be 1.0 wt-%, or less.

A further embodiment of the present invention relates to the compounded polyethylene composition, as described herein, wherein the amount of sodium bicarbonate in the polyethylene composition after the mixing step shall be 0.8 wt-%, or less.

Still a further embodiment of the present invention relates to the compounded polyethylene composition, as described herein, wherein the amount of sodium bicarbonate in the polyethylene composition after the mixing step shall be 0.7 wt-%, or less.

A further embodiment of the present invention relates to the compounded polyethylene composition, as described herein, wherein the amount of sodium bicarbonate in the polyethylene composition after the mixing step shall be 0.6 wt-%, or less.

A further embodiment of the present invention relates to the compounded polyethylene composition, as described herein, wherein $X_1 \le X \le X_3$, and $X_3$ is 1.95.

An even further embodiment of the present invention relates to the compounded polyethylene composition, as described herein, wherein $X_3$ is 1.90.

Still a further embodiment of the present invention relates to the compounded polyethylene composition, as described herein, wherein $X_3$ is 1.85.

An even further embodiment of the present invention relates to the compounded polyethylene composition, as described herein, wherein $X_3$ is 1.80.

A further embodiment of the present invention relates to the compounded polyethylene composition, as described herein, wherein $X_3$ is 1.75.

Still a further embodiment of the present invention relates to the compounded polyethylene composition, as described herein, wherein $X_3$ is 1.70.

A further embodiment of the present invention relates to the compounded polyethylene composition, as described herein, wherein $X_3$ is 1.65.

An even further embodiment of the present invention relates to the compounded polyethylene composition, as described herein, wherein $X_3$ is 1.60.

Still a further embodiment of the present invention relates to the compounded polyethylene composition, as described herein, wherein $X_3$ is 1.55.

A further embodiment of the present invention relates to the compounded polyethylene composition, as described herein, wherein $X_3$ is 1.50.

An even further embodiment of the present invention relates to the compounded polyethylene composition, as described herein, wherein $X_3$ is 1.45.

A further embodiment of the present invention relates to the compounded polyethylene composition, as described herein, wherein $X_3$ is 1.40.

Still a further embodiment of the present invention relates to the compounded polyethylene composition, as described herein, wherein $X_3$ is 1.35.

A further embodiment of the present invention relates to the compounded polyethylene composition, as described herein, wherein $X_3$ is 1.30.

An even further embodiment of the present invention relates to the compounded polyethylene composition, as described herein, wherein $X_3$ is 1.25.

Still a further embodiment of the present invention relates to the compounded polyethylene composition, as described herein, wherein $X_3$ is 1.20.

An even further embodiment of the present invention relates to the compounded polyethylene composition, as described herein, wherein $X_3$ is 1.19.

A further embodiment of the present invention relates to the compounded polyethylene composition, as described herein, wherein $X_3$ is 1.18.

An even further embodiment of the present invention relates to the compounded polyethylene composition, as described herein, wherein $X_3$ is 1.17.

Still a further embodiment of the present invention relates to the compounded polyethylene composition, as described herein, wherein $X_3$ is 1.16.

An even further embodiment of the present invention relates to the compounded polyethylene composition, as described herein, wherein $X_3$ is 1.15.

A further embodiment of the present invention relates to the compounded polyethylene composition, as described herein, wherein $X_1$ is 1.01.

Still a further embodiment of the present invention relates to the compounded polyethylene composition, as described herein, wherein $X_1$ is 1.02.

A further embodiment of the present invention relates to the compounded polyethylene composition, as described herein, wherein $X_1$ is 1.03.

An even further embodiment of the present invention relates to the compounded polyethylene composition, as described herein, wherein $X_1$ is 1.04.

Still a further embodiment of the present invention relates to the compounded polyethylene composition, as described herein, wherein $X_1$ is 1.05.

In still a further embodiment according to the present invention, the compounded polyethylene composition, as described herein, comprises a blend of at least two polyethylene polymers.

An even further embodiment of the present invention relates to the compounded polyethylene composition, as described herein, which is a blend of at least one low density polyethylene polymer and at least one high density polyethylene polymer.

In a further embodiment according to the present invention, the compounded polyethylene composition, as described herein, comprises at least one high density polyethylene (HDPE) with density 930-965 kg/m$^3$.

In still a further embodiment according to the present invention, the compounded polyethylene composition, as described herein, comprises at least one low density polyethylene (LDPE).

In an even further embodiment according to the present invention, the compounded polyethylene composition, as described herein, comprises at least one high density polyethylene (HDPE).

An even further embodiment of the present invention relates to the compounded polyethylene composition, as described herein, wherein the compounded polyethylene composition comprises a blend of at least one high density polyethylene (HDPE) polymer, for example one or two high density polyethylene (HDPE) polymers, and at least one low density polyethylene (LDPE) polymer, for example one or two low density polyethylene (LDPE) polymers.

In a further embodiment according to the present invention, the compounded polyethylene composition, as described herein, comprises a blend which comprises 5-70 percent by weight (wt-%) LDPE, e.g. 10-60 wt-% LDPE, or e.g. 10-50 wt-% LDPE.

An even further embodiment of the present invention relates to the compounded polyethylene composition, as described herein, which comprises at least one low density polyethylene (LDPE), and said low density polyethylene (LDPE) comprises 50 wt-%, or less, of the total amount of polyethylene in the compounded polyethylene composition.

In still a further embodiment according to the present invention, the compounded polyethylene composition, as described herein, comprises a blend which comprises 30-95 wt-% HDPE, e.g. 40-90 wt-% HDPE, or e.g. 50-90 wt-% HDPE.

A further embodiment of the present invention relates to the compounded polyethylene composition, as described herein, which comprises at least one high density polyethylene (HDPE), and said high density polyethylene (HDPE) comprises 50 wt-%, or more, of the total amount of polyethylene in the compounded polyethylene composition.

An even further embodiment of the present invention relates to the compounded polyethylene composition, as described herein, which is a blend of

a. at least one low density polyethylene polymer (LDPE), and
b. at least one high density polyethylene polymer (HDPE),

wherein the low density polyethylene (LDPE) is present in 5-50 wt-% of the total amount of polyethylene, and the high density polyethylene (HDPE) is present in 50-95 wt -% of the total amount of polyethylene.

The high density polyethylene (HDPE) polymer is polymerised in low pressure process, and is, for example, an HDPE homopolymer or an HDPE copolymer of ethylene with one or more comonomer(s). Further, the HDPE is polymerised in a low pressure polymerisation process in the presence of a catalyst. The catalyst can be, for example, a Phillips catalyst, a metallocene catalyst or a Ziegler-Natta catalyst. The polymerisation can be, for example, either gas phase polymerisation, slurry polymerisation or a combination of slurry polymerisation/gas-phase polymerisation or gas-phase polymerisation/gas-phase polymerisation. Further, the polymerisation can also be solution polymerisation.

The polymerisation can be performed in one reactor or in several reactors in series, resulting in uni-, bi- or multimodal polyethylene. By the "modality" of a polymer is meant the structure of the molecular-weight distribution of the polymer, i.e. the appearance of the curve indicating the number of molecules as a function of the molecular weight. If the curve exhibits one maximum, the polymer is referred to as "unimodal", whereas if the curve exhibits a very broad maximum or two or more maxima and the polymer consists of two or more fractions, the polymer is referred to as "bimodal", "multimodal" etc. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the production of unimodal polyethylene, an ethylene polymer is produced in a reactor under certain conditions with respect to monomer composition, hydrogen-gas pressure, temperature, pressure, and so forth. As comonomer, use is commonly made of other olefins having up to 12 carbon atoms, such as $\alpha$-olefins having 3-12 carbon atoms, e.g. propene, butene, 4-methyl-1-pentene, hexene, octene, decene, or etc., in the copolymerisation of ethylene.

Further, in the production of, e.g., a bimodal polyethylene, a first ethylene polymer is produced in a first reactor under certain conditions with respect to monomer composition, hydrogen-gas pressure, temperature, pressure, and so forth. After the polymerisation in the first reactor, the reaction mixture including the polymer produced is fed to a second reactor, where further polymerisation takes place under other conditions. Usually, a first polymer of high melt flow rate (low molecular weight) and with a moderate or small addition of comonomer, or no such addition at all, is produced in the first reactor, whereas a second polymer of low melt flow rate (high molecular weight) and with a greater addition of comonomer is produced in the second reactor. As comonomer, use is commonly made of other olefins having up to 12 carbon atoms, such as $\alpha$-olefins having 3-12 carbon atoms, e.g. propene, butene, 4-methyl-1-pentene, hexene, octene, decene, or etc., in the copolymerisation of ethylene. The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture.

The low density polyethylene (LDPE) polymer is polymerised in a high pressure polymerisation process, and is, for example, an optionally unsaturated LDPE homopolymer or an optionally unsaturated LDPE copolymer of ethylene with one or more comonomer(s).

Further, the LDPE is polymerised in a high pressure polymerisation process, for example, in the presence of an initiator(s), e.g., an LDPE being an optionally unsaturated LDPE homopolymer or an optionally unsaturated LDPE copolymer of ethylene with one or more comonomer(s).

The LDPE can be produced in for example a tubular polymerisation reactor, or in an autoclave polymerisation reactor.

The invention further relates to a process for manufacturing a compounded polyethylene, as described herein, which process comprises compounding a polyethylene composition and sodium bicarbonate, wherein in said process the specific energy input (SEI) is kept at a level of **Y** kWh/ton or less, wherein **Y** is 200.

Specific energy input is a measure of how much energy that has been put into the material in the mixing process. A lower energy input means that less mixing work has been performed on the material and it can be used as a measure of the level of mixing. The energy input into the material is relevant for all types of mixing. In this invention, the energy input is kept at low level in order to reduce the amount of the sodium bicarbonate that reacts during the mixing process. This can be done by using a compounding unit that provides a soft mixing such as a batch wise mixer with counter rotating mixing elements which are non-intermeshing. Such a mixer is suitable as it is enables good control of SEI during compounding. An example of batch wise mixer with counter rotating mixing elements is the Banbury mixer. Another type of compounding unit giving a soft mixing is counter rotating twin screw mixers.

Compounding units with high energy inputs are not suitable for compounding of polyethylene compositions containing the sodium bicarbonate. An example of such a mixer is the BUSS type of mixer which is a unique type of single screw mixer with oscillating screw shaft. BUSS mixers are very efficient in mixing, but the high energy input into the material in such a mixing process results in a high loss of the sodium bicarbonate.

The process for manufacturing a compounded polyethylene comprises compounding a polyethylene composition and sodium bicarbonate, wherein in said process the specific energy input (SEI) is kept at a moderate level in order to keep the decomposition of sodium bicarbonate in the compounding process at a minimum. If the specific energy input is too high then the losses of sodium bicarbonate would be large which results in a very inefficient process.

A further embodiment of the present invention relates to for manufacturing a compounded polyethylene composition, as described herein, wherein the sodium bicarbonate is comprised in a blowing agent formulation.

The blowing agent formulation which comprises sodium bicarbonate can further comprise for example nucleators or other chemical blowing agents. Nucleators used in the blowing agent formulation can be for example mineral fillers. Other blowing agents used in the blowing agent formulation can be for example citric acid, derivates of citric acid or azodicarbonamide.

Furthermore, the blowing agent formulation comprises a masterbatch carrier material which is a polymer. The masterbatch carrier polymer is, for example, a polyethylene polymer.

A further embodiment of the present invention relates to said process wherein the specific energy input (SEI) is kept at a level of **Y** kWh/ton or less, wherein **Y** is 190.

An even further embodiment of the present invention relates to the process, as described herein, wherein **Y** is 180.

Still a further embodiment of the present invention relates to the process, as described herein, wherein **Y** is 170.

In a further embodiment according to the present invention, a process, as described herein, is disclosed wherein **Y** is 160.

An even further embodiment of the present invention relates to the process, as described herein, wherein **Y** is 150.

Still a further embodiment of the present invention relates to the process, as described herein, wherein **Y** is 140.

The present invention do also relate to an article, for example, a coating, a core or a cable, comprising the compounded polyethylene composition, as described herein, wherein the compounded polyethylene composition is foamed.

The foamed polyethylene composition may, for example, be used as an insulation on cable cores for telephone and data cables. Further, copper or aluminium wires may, for example, be coated with a foamed polyethylene to form a cable core. A cable, as described herein, can be, for example, a telecommunication cable, data cable or coaxial cable.

Furthermore, the present invention also relates to a process for producing an article, wherein said process comprises use, for example, in extrusion, of a compounded polyethylene composition as described herein.

The present invention do also relate to a use of a compounded polyethylene composition as described herein.

The following examples illustrate, but intend not to limit, the present invention.

## Examples

**1.** Methods

The comparative example CE1 was prepared in a Buss Co-Kneader 100 MDK/E-11L/D, i.e. a single screw mixer with a downstream discharge single screw extruder with an under water pelletizing unit cutting pellets in the molten stage. The mixer temperatures were set to 55°C, screw temperature to 30°C and the discharge extruder to 120°C. The mixer screw speed was 120 rpm and the throughput 75 kg/h. The inventive examples IE1-IE4 were instead produced in a Farrel F270 Banbury mixer where the mixing was steered on SEI with three ram lifts during the mixing process (after 35, 90 and 120 seconds) and ram pressure limitation of 4 bar. After mixing, the material was dropped into a 15-inch extruder from Pomini Farrel and after leaving the extruder the material was pelletized by under water pelletizing. For IE1 and IE3 the mixing was stopped at a SEI of 138 kWh/ton and for IE2 and IE4 at 145 kWh/ton.

The amount of sodium bicarbonate in the formulation was determined by isothermal treatment of samples at 170°C where the amount of $CO_2$ formed from decomposition of sodium bicarbonate is quantified using a $CO_2$ detector based on infrared spectroscopy. Below is a description of the method:

### Equipment

Oven: Metrohm 832 KF Thermoprep, Herisau, Switzerland. The air used to purge the $CO_2$ is lead through a column with soda/lime to remove $CO_2$.

$CO_2$ detector: SBA-5 (100000 ppm range) PP-systems Amesbury, USA.

### Chemicals

Sodium hydrogen carbonate, reagent grade (> 99.7 %), Scharlau Chemi SA, Barcelona, Spain.

### Procedure

Approximately 200 mg ground polyethylene is weighed in a glass vial intended for use in Metrohm 832 KF Themoprep. The vial is sealed.

The needle in the 832 KF Themoprep is pierced through the septum and purified air is pumped through the vial for about a minute to remove the $CO_2$ form the air trapped in the vial. The vial is placed in the oven at 170°C and the evolved $CO_2$ is detected with the SBA-5 detector. For calibration, a calibration curve prepared from weighed amounts of sodium hydrogen carbonate (here being the same as sodium bicarbonate) is used.

For determination of the loss of sodium bicarbonate in the compounding step, the blowing agent masterbatch added to the samples is analysed using the same method. The loss of sodium bicarbonate in percentage is then calculated by the below formula:

$$A = (1 - \frac{B}{C * D})$$

Where A is the weight percentage of sodium bicarbonate in the polyethylene composition after compounding compared to the weight percentage of sodium bicarbonate that was added to the formulation via the masterbatch, B is the weight percentage of sodium bicarbonate in the polyethylene composition sample determined by the analysis method described above, C is the weight percentage of sodium bicarbonate in the blowing agent masterbatch and D is the weight percentage of the blowing agent masterbatch within the polyethylene composition.

**2.** Materials:

HDPE: A unimodal HDPE base resin produced with a Phillips catalyst with density 946 kg/m$^3$ and MFR (2.16 kg and 190°C) of 0.95 g/10 min.

LDPE: A tubular LDPE with density 923 kg/m$^3$ and MFR (2.16 kg and 190°C) of 0.75 g/10 min.

Tracel® PO 4207: An endothermic blowing agent masterbatch commercially available from Tramaco GmbH containing a mixture of the blowing agents sodium bicarbonate and a derivate of citric acid. The masterbatch further comprises a nucleating agent comprising a mineral nucleating agent.

Pentaerythrityl-tetrakis(3-(3',5'-di-tert. butyl-4-hydroxyphenyl)-propionate: Antioxidant commercially available from BASF GmbH under the grade name Irganox 1010 (CAS-no: 6683-19-8).

N,N'-bis(3(3'5'-di-tert. butyl-4'-hydroxyphenyl)propionyl) hydrazine: Metal deactivator commercially available from BASF GmbH under the grade name Irganox MD 1024 (CAS-no: 32687-78-8).

**Table**

| | CE1 | IE1 | IE2 | IE3 | IE4 |
|---|---|---|---|---|---|
| HDPE (wt-%) | 51.2 | 51.2 | 51.2 | 81.2 | 81.2 |
| LDPE (wt-%) | 46.3 | 46.1 | 46.1 | 15.05 | 15.05 |
| Tracel PO 4207 (wt-%) | 2 | 2 | 2 | 3.25 | 3.25 |
| Pentaerythrityl-tetrakis(3-(3',5'-di-tert. butyl-4-hydroxyphenyl)-propionate (wt-%) | 0.25 | 0.25 | 0.25 | 0.25 | 0.25 |
| N,N'-bis(3(3'5'-di-tert. butyl-4'-hydroxyphenyl)pro pionyl) hydrazine (wt-%) | 0.25 | 0.25 | 0.25 | 0.25 | 0.25 |
| Specific energy input during compounding SEI (kWh/ton) | 240 | 138 | 145 | 138 | 145 |
| Loss of sodium bicarbonate (%) | 50% | 6% | 13% | 14% | 17% |
| Sodium bicarbonate left after compounding (%) | 50% | 94% | 87% | 86% | 83% |
| Ratio of sodium bicarbonate before and after compounding | 2.00 | 1.06 | 1.15 | 1.16 | 1.20 |

**Claims**

**1.** A compounded polyethylene composition having a density of 930 to 965 kg/m$^3$ and comprising at least 0.01 percent by weight (wt-%) of sodium bicarbonate after compounding of the compounded polyethylene composition, wherein the ratio between sodium bicarbonate, in the polyethylene composition, before and after compounding is **X,** wherein $X_1 \leq X < X_2$, and $X_1$ is 1.00 and $X_2$ is 2.00.

**2.** A compounded polyethylene composition according to claim 1, wherein the compounded polyethylene composition is foamable.

**3.** A compounded polyethylene composition according to claim 1 or 2, wherein $X_1 \leq X \leq X_3$, and $X_3$ is 1.95.

**4.** A compounded polyethylene composition according to claim 3, wherein $X_3$ is 1.90.

**5.** A compounded polyethylene composition according to claim 3, wherein $X_3$ is 1.75.

**6.** A compounded polyethylene composition according to claim 3, wherein $X_3$ is 1.60.

**7.** A compounded polyethylene composition according to claim 3, wherein $X_3$ is 1.50.

**8.** A compounded polyethylene composition according to any of claims 1 to 7, which comprises a blend of at least two polyethylene polymers.

**9.** A compounded polyethylene composition according to any of claims 1 to 8, which comprises at least one high density polyethylene (HDPE), and said high density polyethylene (HDPE) comprises 50 wt-%, or more, of the total amount of polyethylene in the compounded polyethylene composition.

10. A process for manufacturing a compounded polyethylene composition according to any of claims 1 to 9, which process comprises compounding a polyethylene composition and sodium bicarbonate, wherein in said process the specific energy input (SEI) is kept at a level of **Y** kWh/ton or less, wherein **Y** is 200.

11. A process according to claim 10, wherein the sodium bicarbonate is comprised in a blowing agent formulation.

12. A process according to claim 10 or 11, wherein Y is 160.

13. An article, for example, a coating, a wire or a cable, comprising the compounded polyethylene composition according to any of claims 1 to 9, wherein the compounded polyethylene composition is foamed.

14. A process for producing an article, wherein said process comprises use, for example, in extrusion, of a compounded polyethylene composition according to any of claims 1 to 9.

15. Use of a compounded polyethylene composition according to any of claims 1 to 9.

Europäisches
Patentamt

European
Patent Office

Office européen
des brevets

# EUROPEAN SEARCH REPORT

Application Number

EP 15 20 1197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/099335 A2 (DOW GLOBAL TECHNOLOGIES LLC [US]) 26 June 2014 (2014-06-26) <br> * paragraph [0073]; claims 1,3,10 * <br> * paragraph [0054]; claims 1,3,4 * <br> ----- | 1-14 | INV. <br> C08L23/04 |

TECHNICAL FIELDS
SEARCHED (IPC)

C08L
C08K

The present search report has been drawn up for all claims

| Place of search | Date of completion of the search | Examiner |
|---|---|---|
| Munich | 22 March 2016 | Rouault, Yannick |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 
.............................................................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 15 20 1197

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2016

| Patent document cited in search report | | | Publication date | Patent family member(s) | | | Publication date |
|---|---|---|---|---|---|---|---|
| WO 2014099335 | A2 | | 26-06-2014 | CA | 2894502 | A1 | 26-06-2014 |
| | | | | CN | 104870534 | A | 26-08-2015 |
| | | | | EP | 2935424 | A2 | 28-10-2015 |
| | | | | JP | 2016501962 | A | 21-01-2016 |
| | | | | KR | 20150100675 | A | 02-09-2015 |
| | | | | US | 2015307679 | A1 | 29-10-2015 |
| | | | | WO | 2014099335 | A2 | 26-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014018768 A

**Non-patent literature cited in the description**

- **HARTMAN et al.** *Ind. Eng. Chem. Res.,* 2013, vol. 52, 10619-10626